(19) Europäisches Patentamt
European Patent Office
Office européen des brevets

(11) EP 3 435 466 A1

(12) EUROPEAN PATENT APPLICATION

(43) Date of publication:
30.01.2019 Bulletin 2019/05

(51) Int Cl.:
H01M 10/04 (2006.01)     H01M 10/0525 (2010.01)

(21) Application number: 17182735.5

(22) Date of filing: 24.07.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicants:
• Robert Bosch GmbH
70442 Stuttgart (DE)
• Lithium Energy and Power GmbH & Co. KG
70469 Stuttgart (DE)

(72) Inventors:
• Deromelaere, Gaetan
Lithium Energy And Power Corpo, 601 8520 (JP)
• Klinsmann, Markus
70195 Stuttgart (DE)

(74) Representative: Isarpatent
Patent- und Rechtsanwälte Behnisch Barth
Charles
Hassa Peckmann & Partner mbB
Postfach 44 01 51
80750 München (DE)

(54) SAFETY DEVICE, SAFETY SYSTEM, SAFEGUARDED BATTERY UNIT AND METHOD FOR DECREASING THE TOTAL POWER OUTPUT OF A BATTERY ELEMENT

(57) The present invention relates to a safety device (20) for decreasing the total power output of a battery element (12) comprising at least one component (26) with porous material, especially of a Li-ion battery element (16), in response to a trigger signal, which safety device (20) includes a compression unit (22) for actively compressing at least the component (26) with the porous material, wherein the compression unit (22) is suitable for compressing the porous material in such way that the output current of the battery element (12) is significantly reduced as a result of a reduction of the porosity of the porous material due to the compression.

The present invention further relates to a corresponding safety system (14), a corresponding battery unit (10) and a corresponding method for discharging a battery element (12).

## Fig. 1

## Description

The present invention relates to a safety device for decreasing the total power output of a battery element in response to a trigger signal.

The present invention further relates to a corresponding safety system, a corresponding safeguarded battery unit with a battery element and a safety system and a corresponding method for decreasing the total power output of a battery element.

State of the art

Battery elements for electrochemical storage frequently contain aggressive substances which, when set free, may lead to the endangerment of persons and objects. In some energy store elements, for instance lithium ion ("Li-ion") battery elements, there is the additional danger of fire and/or explosion, since the electrolyte used is combustible. As a result, known batteries and capacitors are constructed in such a way that they are able to withstand the mechanical stresses that are to be expected, without a cover of the battery being injured, so that transition of the dangerous substances into the surroundings of the energy store is prevented.

In spite of this, damage to the cover is never quite to be excluded. In the field of motor vehicles, for example, in which a battery may be used for supplying the vehicle electrical system or for driving something, in case of an accident, even a well secured battery may be greatly deformed and may burst open. The ignition of the exiting electrolyte may take place during the deformation or later, quite possibly even after several seconds or minutes.

Li-ion batteries are vital energy storage devices due to their high specific energy density. They are predominantly used in consumer electronics; however, improvements in safety are required for full acceptance of Li-ion cells in transportation applications, such as electric vehicles. The presence of a volatile, combustible electrolyte and an oxidizing agent (lithium oxide cathodes) makes the Li-ion cell susceptible to fires and explosions. Internal shorts or mechanical damage, e.g. caused within certain abuse tests such as the nail penetration test, create local current paths over which the cell discharges. The corresponding electric currents are accompanied by a strongly localized Joule heating. This leads to a strong increase of the local temperature at the internal short or nail penetration location. When a critical temperature is reached, exothermic chemical reactions are initiated between the electrodes and the electrolyte, raising the cell's internal pressure and temperature even more. The increased temperature accelerates these chemical reactions, producing more heat.

A possible measure to prevent catastrophic thermal failure in commercial Li-ion batteries is the reduction of the localized current around the nail or internal short. This can, e.g., be done by an external low-resistance current path, a so called "fast discharge device".

Document US 2013/0017421 A1 describes a safety apparatus for a battery pack, the apparatus comprising: a sensor device for detecting a safety event and a safety device including a fast discharge device for decreasing the total power output of battery elements of the battery pack in response to a trigger signal of said danger sensor device and an airbag system with an airbag configured to secure the battery upon inflation and an inflation device connected to the sensor and the airbag. The airbag is used for disconnecting the battery pack from a power bus or for disconnecting battery elements of the battery pack from one another.

Document EP 3 051 607 A1 shows another safety device with an inflatable structure for battery protection.

Disclosure of the invention

The safety device for decreasing the total power output of a battery element with the features of claim 1 has the advantage that the total power output of a battery element can be reduced quick with low risk of a thermal overload.

The safety device according to the invention for decreasing the total power output of a battery element comprising at least one component with porous material, especially of a Li-ion battery element, in response to a trigger signal, includes a compression unit for actively compressing at least the component of the battery element with the porous material, wherein the compression unit is suitable for compressing the porous material in such way that the output current of the battery element is significantly reduced as a result of a reduction of the porosity of the porous material due to the compression. The battery element can be a battery cell or any other battery element. Preferably the battery element is a Li-ion battery element, especially a Li-ion battery cell. The corresponding components of Li-ion cells including porous material are electrodes and/or separators. The trigger signal is usually given by a danger detecting device for detecting a dangerous situation relating to said battery element.

The basic idea is an active compression of porous battery element material, i.e. of the material of electrodes and/or a separator, to increase the internal resistance of the battery element in case of an upcoming safety critical event.

A compression unit for compressing the porous material of a battery element component is a measure to decrease the total power output of the battery element by effectively increasing its internal resistance, so that the total current flow is reduced and therefore also the localized current around the critical location.

According to an embodiment of the invention, the safety device further comprises a discharge unit for discharging the battery element. Such a discharge unit is well known as the fast discharge device mentioned at the beginning.

According to another embodiment of the invention, the compression unit comprises at least one activatable compression element for volume expansion. The expansion principle of the compression element can be based on pyrotechnical expansion and/or thermo-mechanical expansion and/or chemo-mechanical expansion.

In practice the activatable compression element is placed directly adjacent to the battery element or even directly adjacent to the component of the battery element with the porous material. The compression element or an arrangement of compression elements may surround the battery element or even the component with the porous material to generate an external pressure with even pressure distribution.

According to yet another embodiment of the invention, the compression element comprises expanding material. The expanding material can be a foam, a gas, etc.

According to a further embodiment of the invention, the compression unit comprises a rigid case for encasing the compression element as well as the component of the battery element. This arrangement is another measure to generate an external pressure with even pressure distribution on the battery element or directly on the component with the porous material of said battery element.

The present invention further relates to a safety system comprising: (i) a danger detecting device for detecting a dangerous situation and for generating a trigger signal output in a dangerous situation and (ii) an aforementioned safety device for decreasing the total power output of a battery element in response to the trigger signal of said danger detecting device. This safety device includes a compression unit for actively compressing at least one component of the battery element comprising porous material, wherein the compression unit is suitable for compressing the porous material in such way that the output current of the battery element is significantly reduced as a result of a reduction of the porosity of the porous material due to the compression.

The present invention further relates to a safeguarded battery element unit of a battery, especially of a traction battery, comprising a battery element, a housing enclosing at least said battery element and the aforementioned safety apparatus. According to an embodiment of the invention, the unit is a Li-Ion battery unit with at least one Li-Ion battery element, especially a Li-Ion battery cell.

The battery element/battery cell may be formed as a so-called jelly roll or wounded type cell, respectively, or it may have a stacked arrangement, for example.

The present invention finally relates to a method for decreasing the total power output of a battery element comprising at least one component with porous material, especially of a Li-ion battery element, in response to a trigger signal, wherein the safety device includes a compression unit for actively compressing the battery element or the at least one component of the battery element comprising porous material. The triggered compression unit compresses the porous material in such way that the output current of the battery element is significantly reduced as a result of a reduction of the porosity of the porous material due to the compression. The trigger signal is usually given by a danger detecting device for detecting a dangerous situation relating to said battery element.

According to an embodiment of the invention the compression is performed by use of at least one activatable compression element for volume expansion. The activatable compression element expands suddenly in response to the trigger signal and compresses the at least one component of the battery element.

With regard to further technical features and advantages of the safety device, safety system, battery unit and method for decreasing the total power output of a battery element as described above, it is referred to the figures and the description of the figures.

Figures

Further advantages and embodiments of the subject-matters as described herein are described in the figures and the following description of the figures, wherein the features described may be part of the invention alone or in any combination, insofar it is not excluded due to the description or the context. It has to be noted that the figures are of illustrative purpose, only, and are not meant to restrict the present subject-matters.

Fig. 1     shows a block diagram of a safeguarded battery unit with a battery element and a safety system according to a preferred embodiment of the invention;

Fig. 2     shows an arrangement of a component of the battery element with porous material and a compression unit of the safety system shown in Fig. 1; and

Fig. 3     shows an alternative arrangement of a component of the battery element with porous material and a compression unit of the safety system shown in Fig. 1.

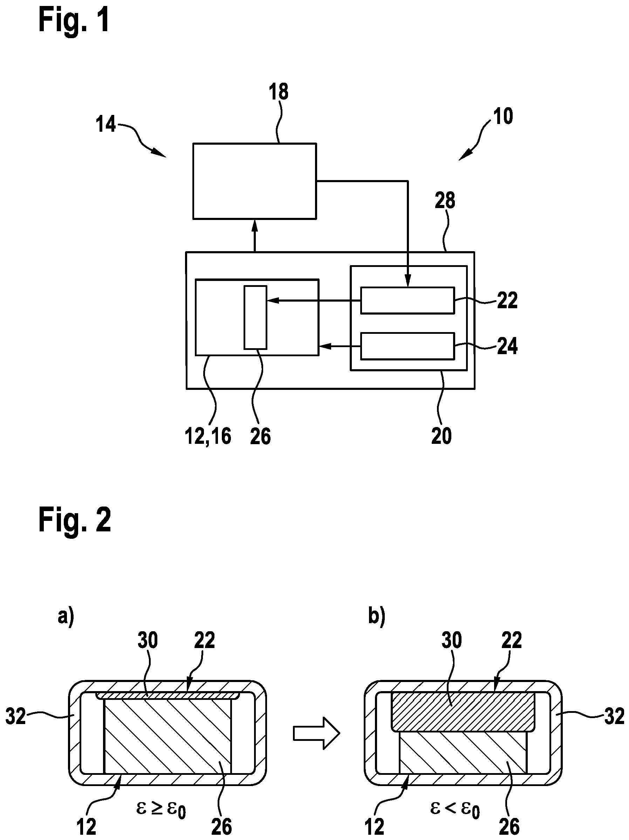

Fig. 1 shows a block diagram of a safeguarded battery unit 10 of a battery, e.g. the traction battery of a motor vehicle. The battery unit 10 comprises a battery element 12 and a safety system 14 for said battery element 12. The battery element 12 is an element like, e.g. a battery cell, of a rechargeable battery (also known as a secondary battery or accumulator). Preferably said battery element 12 is a Li-ion battery element 16, especially a Li-ion battery cell. The safety system 14 on its part comprises a danger detecting device 18 for detecting a dangerous situation relating to said battery element 12 and for generating a trigger signal in response to the detection of a dangerous situation. The danger detecting device 18 is a kind of danger sensor. The safety system 14 further comprises a safety device 20 for decreasing the total power output of said battery element 12 in response to the trigger signal of said danger detecting device 18. The safety device 20 comprises two different units 22, 24 for decreasing the total power output of the battery element 12, namely a compression unit 22 for an active compression of one or more components 26 of said battery element 12 comprising porous material and a discharge unit 24 for discharging the battery element 12. Both units 22, 24 are triggered by the trigger signal of the danger detecting device 18. The danger detecting device 18 e.g. detects a mechanical effect on the battery unit 10 effecting the battery element 12. The discharge unit 24 can be a device known as a "fast discharge device" providing a current path for performing the fast discharge of the battery element.

The safeguarded battery unit 10 further comprises a housing 28 enclosing the safety device 20 of the safety system 14 and the battery element 12.

In the following the underlying concept is illustrated by an example where the battery element 12 is a Li-ion cell of a Li-ion battery (LIB). The corresponding components 26 of a Li-ion cell including porous material are electrodes and/or separators. Of course the concept will work with other elements 12 and components 26 as well.

The effective transport properties of Li+-ions in the electrolyte of LIBs are strongly dependent on the porosity and tortuosity of the porous composite material of the corresponding battery cell components 26. Compression of the material leads to a lower porosity, which results in worsened Li+-transport from the anode to the cathode during discharge, i.e. particularly in the case of an internal short or during nail penetration. This limits the electric current flowing in such circumstances and therefore may lead to a less hazardous behavior of the cell (battery element 12).

The effect may support the so called fast discharge device since a lower total current leads to a smaller localized current at the internal short or nail penetration location. In addition, the reduced total current may lead to less demanding requirements for the discharge unit 24 (a kind of fast discharge device) itself since less heat is generated in the discharge unit 24 when the current is lower. Further, the principal idea of the fast discharge device is to work in conjunction with a shutdown separator, which deactivates the cell (battery element 12) by closing its pores after being heated up homogeneously to a certain threshold temperature. Compression of the cell (battery element 12) or at least components 26 of the cell/element 12 may improve the effectiveness of the closing mechanism of the pores in the separator since, especially at higher temperatures, the external force may induce plastic flow of the separator material into the pores.

The use of the compression unit 22 will also function without the discharge unit 24 to attenuate the criticality of a hazardous state of a LIB and extend the time to initiate further countermeasures to bring it to a final safe state. In an alternative execution example (not shown) the safety device 20 for decreasing the total power output of said battery element 12 does not include a discharge unit 24.

Transport parameters in the electrodes or separators of a lithium-ion cell are often modeled by a Bruggeman-relation of the form

$$\sigma_{eff} = \varepsilon^{\alpha}\sigma$$

where $\sigma_{eff}$ is the effective conductivity, $\varepsilon$ is the porosity, $\sigma$ is the actual conductivity of the electrolyte and $\alpha$ is the so-called Bruggeman-coefficient. A typical value for this parameter is $\alpha = 1.5$. However, also other values (mostly $\alpha > 1.5$ are also found in literature). Similarly the effective diffusion coefficient is

$$D_{eff} = \varepsilon^{\alpha}D,$$

with the actual diffusion coefficient of the electrolyte D. Hence, as the porosity decreases, the transport parameters decrease, leading to a larger internal resistance and less power/current output if the cell/battery element 12 is shorted.

The expansion mechanism can be applied internally within the cell/battery element 12 or externally. The former is shown in Fig. 2.

Fig. 2 shows an arrangement of a component 26 of the battery element 12 with porous material and a compression unit 22 of the safety device 20 shown in Fig. 1 in a working state of the battery element 12 (a) and in the triggered state of the compression unit 22 (b). The compression unit 22 comprises a compression element 30 and a case 32 for encasing the compression element 30 as well as the component 26 of the battery element 12, wherein the case 32 is a rigid case.

This type of application would be most appropriate for "rigid cell cases", e.g. prismatic cells or other new cell designs.

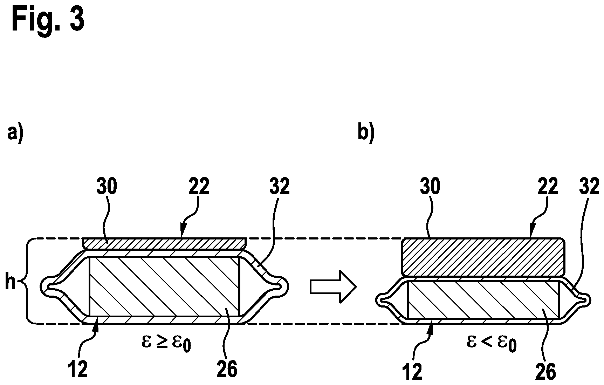

An external application is shown in Fig. 3, which figure shows another arrangement of a component 26 of the battery element 12 with porous material and a compression unit 22 of the safety device 20 shown in Fig. 1 in a working state of the cell/battery element 12 (a) and in the triggered state of the compression unit 22 (b). The compression unit 22 comprises a compression element 30 and at least the component 26 of the battery element 12 with porous material is encased by a case 32 formed as a soft case.

If the mechanism is applied from outside of the cell, the cell case needs to allow deformation, such as, for example, possible with a pouch cell. The entire system (soft case and expanding material/device) then needs an outer fixation, e.g. by other pouch cells that are clamped within a rigid module housing.

The expansion principle can be either entirely mechanical (e.g. through a spring or clicker-like mechanism), pyrotechnically (e.g. through a gas generator like in Airbag-applications), thermo-mechanically (through materials with large thermal expansion coefficients) or chemo-mechanically (e.g. using polymeric foams with large volume expansion when brought in contact with certain liquids). Alternative methods can be thought of.

**Claims**

1. A safety device (20) for decreasing the total power output of a battery element (12) comprising at least one component (26) with porous material, especially of a Li-ion battery element (16), in response to a trigger signal, which safety device (20) includes a compression unit (22) for actively compressing at least the component (26) with the porous material, wherein the compression unit (22) is suitable for compressing the porous material in such way that the output current of the battery element (12) is significantly reduced as a result of a reduction of the porosity of the porous material due to the compression.

2. The safety device according to claim 1, **characterized by** a discharge unit (24) for discharging the battery element (12).

3. The safety device according to claim 1 or 2, **characterized in that** the compression unit (22) comprises at least one activatable compression element (30) for volume expansion.

4. The safety device according to claim 3, **characterized in that** the expansion principle of the compression element (30) is based on pyrotechnical expansion and/or thermo-mechanical expansion and/or chemo-mechanical expansion.

5. The safety device according to claim 3 or 4, **characterized in that** the compression element (30) comprises expanding material.

6. The safety device according to one of claims 3 to 5, **characterized in that** the compression unit (22) comprises a rigid case (32) for encasing the compression element (30) as well as the component (26) of the battery element (12).

7. A safety system (14), comprising:

- a danger detecting device (18) for detecting a dangerous situation and for generating a trigger signal output in a dangerous situation and
- a safety device (20) for decreasing the total power output of a battery element (12) in response to the trigger signal of said danger detecting device (18), **characterized in that** the safety device (20) is a safety device (20) according to one of claims 1 to 6.

8. A safeguarded battery unit (10) of a battery, especially of a traction battery, the unit (10) comprising:

- a battery element (12), especially a Li-ion battery element (16),
- a housing (28) enclosing at least the battery element (14) and
- the safety system (14) according to claim 7.

9. A method for decreasing the total power output of a battery element (12) comprising at least one component (26) with porous material, especially of a Li-ion battery element (16), in response to a trigger signal, wherein the safety device (20) includes a compression unit (22) for actively compressing the at least one component (26) of the battery element (12) with porous material, wherein the triggered compression unit (22) compresses the porous material in such way that the output current of the battery element (12) is significantly reduced as a result of a reduction of the porosity of the porous material due to the compression.

10. The method according to claim 9, **characterized in that** the compression is performed by use of at least one activatable compression element (30) for volume expansion.

# Fig. 1

# Fig. 2

a)

$\varepsilon \geq \varepsilon_0$

b)

$\varepsilon < \varepsilon_0$

# Fig. 3

a)

$\varepsilon \geq \varepsilon_0$

b)

$\varepsilon < \varepsilon_0$

Europäisches
Patentamt

European
Patent Office

Office européen
des brevets

# EUROPEAN SEARCH REPORT

Application Number

EP 17 18 2735

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/018038 A2 (PACIFIC LITHIUM NEW ZEALAND LT [NZ]; DESILVESTRO HANS [NZ]; VAN VEEN C) 24 February 2005 (2005-02-24) * claims 1, 11; page 12, lines 1-10; figure 2 * | 1-3,5,6 | INV. H01M10/04 H01M10/0525 |
| X | WO 2011/050913 A1 (VOLKSWAGEN AG [DE]; DEYDA ANDREAS [DE]) 5 May 2011 (2011-05-05) * paragraphs 20, figures 2, 2a * | 1,3-5,7,8 | |
| A | WO 2008/076040 A1 (NILAR INT AB [SE]; FREDRIKSSON LARS [SE]; PUESTER NEIL H [US]) 26 June 2008 (2008-06-26) * Figures 2, 3a, 3b, 3c; page 5, line3-page 7-line 11 * | 1-10 | |

TECHNICAL FIELDS
SEARCHED (IPC)

H01M

The present search report has been drawn up for all claims

| Place of search | Date of completion of the search | Examiner |
|---|---|---|
| Munich | 21 September 2017 | Bettio, Andrea |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

# EP 3 435 466 A1

## ANNEX TO THE EUROPEAN SEARCH REPORT
## ON EUROPEAN PATENT APPLICATION NO.

EP 17 18 2735

This annex lists the patent family members relating to the patent documents cited in the above-mentioned European search report.
The members are as contained in the European Patent Office EDP file on
The European Patent Office is in no way liable for these particulars which are merely given for the purpose of information.

21-09-2017

| Patent document cited in search report | Publication date | Patent family member(s) | Publication date |
|---|---|---|---|
| WO 2005018038 A2 | 24-02-2005 | US 2007042264 A1<br>WO 2005018038 A2 | 22-02-2007<br>24-02-2005 |
| WO 2011050913 A1 | 05-05-2011 | CN 102687321 A<br>DE 102009050996 A1<br>EP 2494639 A1<br>KR 20120087968 A<br>US 2012276422 A1<br>WO 2011050913 A1 | 19-09-2012<br>12-05-2011<br>05-09-2012<br>07-08-2012<br>01-11-2012<br>05-05-2011 |
| WO 2008076040 A1 | 26-06-2008 | AT 486742 T<br>EP 2094523 A1<br>SE 530201 C2<br>WO 2008076040 A1 | 15-11-2010<br>02-09-2009<br>25-03-2008<br>26-06-2008 |

EPO FORM P0459

For more details about this annex : see Official Journal of the European Patent Office, No. 12/82

9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130017421 A1

- EP 3051607 A1